# EUROPEAN PATENT APPLICATION

(11) **EP 3 517 861 A1**
(43) Date of publication of application: **31.07.2019**
(21) Application number: 17852126.6
(22) Date of filing: 24.04.2017
(51) Int. Cl.: F25B 47/02

(54) **AIR CONDITIONER AND DEFROSTING SYSTEM THEREOF**

(30) Priority: 26.09.2016 CN 201610850888
(71) Applicant: Gree Electric Appliances, Inc. of Zhuhai, Zhuhai, Guangdong 519070 (CN)
(72) Inventor: FENG, Tao, Guangdong 519070 (CN); LI, Limin, Guangdong 519070 (CN); JIAO, Huachao, Guangdong 519070 (CN); HUANG, Wenhao, Guangdong 519070 (CN); JIN, Mengmeng, Guangdong 519070 (CN)
(74) Representative: Balder IP Law, S.L.
(86) International application number: PCT/CN2017/081611
(87) International publication number: WO 2018/054052

(57) **Abstract**

An air conditioner and a defrosting system thereof. The defrosting system includes an enthalpy-adding compressor (11), an outdoor heat exchanger (12), an indoor heat exchanger (13) and an economizer (14); the enthalpy-adding compressor (11) includes a medium-pressure chamber and an enthalpy injection port which is in communication with the medium-pressure chamber; the economizer (14) has a first flow channel (15) and a second flow channel (16); a first end of the first flow channel (15) is connected to the outdoor heat exchanger (12) through a first pipeline system (19), and a second end of the first flow channel (15) is in communication with the indoor heat exchanger (13) through a main pipeline; a first end of the second flow channel (16) is connected to the main pipeline through an auxiliary pipeline, and a second end of the second flow channel (16) is connected to the enthalpy injection port of the enthalpy-adding compressor (11) through a second pipeline system (20); the second pipeline system (20) is provided with a valve device (18); the auxiliary pipeline is provided with a throttling and pressure reducing member (17); refrigerant, after being throttled and depressurized by the throttling and pressure reducing member (17), enters the second flow channel (16) and absorbs heat of refrigerant in the first flow channel (15). The defrosting system of the air conditioner can reduce defrosting time, thereby meeting use's requirements for comfort.

## Description

This application claims the benefit of priority of Chinese Patent Application No. 201610850888.7, filed on September 26, 2016 with the State Intellectual Property Office of China and entitled "Air Conditioner and Defrosting System Thereof', the entire contents of which are incorporated herein by reference.

### TECHNICAL FIELD

The present invention relates to the field of air conditioning technology, and more particularly to an air conditioner and a defrosting system thereof.

### BACKGROUND

When the air conditioning system operates in a heating mode in a humid and cold environment, the outdoor heat exchanger acts as an evaporator. As the surface temperature of the outdoor heat exchanger is lower than 0°C, the gaseous humid air in the air outside easily condenses into frost on the surface of the outdoor heat exchanger. Also, diverted by the external fan, the frost will cover the entire outdoor heat exchanger, which will block heat exchange between the heat exchanger and the air, so that the outdoor unit cannot absorb heat from outside, resulting in temperature drops of the outlet air from the indoor unit, and accordingly, hot air cannot be produced, which will result in poor comfort and simultaneously endanger the safety of the unit.

In order to meet the user's requirements for comfort, the air conditioning system usually has a defrosting mode. Once the temperature of the outdoor defrosting sensor is less than the pre-set value, the air conditioning system enters the defrosting mode, and the four-way valve is reversed; the system is converted from a heating mode to a cooling mode; and the outdoor heat exchanger acts as a condenser. As the outdoor heat exchanger directly receives the high-temperature and high-pressure gas refrigerant discharged from the compressor, the high-temperature refrigerant will melt the frost covering the outdoor heat exchanger, forming liquid water that flows out of the outdoor heat exchanger. After completing defrosting, the air conditioning system enters the heating mode once again, and the outdoor heat exchanger can fully absorb heat from the outdoor environment, thereby ensuring the temperature of the outlet air from the indoor unit.

However, in the prior art, most air conditioning systems are provided with an ordinary frequency conversion scroll compressor with a high pressure cavity. Such a compressor has disadvantages of "common frequency, low flow rate, and low power consumption", which will prolong the defrosting time and reduce the user's comfort experiences.

Therefore, how to shorten the defrosting time and improve the comfort of the user's experiences has become an important technical problem to be solved by those skilled in the art.

### SUMMARY OF THE INVENTION

In view of this, one objective of the present invention is to provide a defrosting system of an air conditioner, which can shorten the defrosting time and meet the user's requirements for comfort. Another objective of the present invention is to provide an air conditioner including the defrosting system above.

A defrosting system of an air conditioner provided by the present invention includes an enthalpy-adding compressor, an outdoor heat exchanger, an indoor heat exchanger, and an economizer; wherein, the enthalpy-adding compressor includes a medium-pressure chamber and an enthalpy injection port in communication with the medium-pressure chamber; the economizer is provided with a first flow channel and a second flow channel; a first end of the first flow channel is in communication with the outdoor heat exchanger through a first pipeline system; a second end of the first flow channel is in communication with the indoor heat exchanger through a main pipeline; a first end of the second flow channel is in communication with the main pipeline through an auxiliary pipeline; a second end of the second flow channel is in communication with an enthalpy injection port of the enthalpy-adding compressor through a second pipeline system; a valve device is arranged in the second pipeline system; when a refrigerant pressure in the second flow channel reaches a preset value, the valve device is opened, enabling the refrigerant in the second flow channel to be injected into the medium-pressure chamber through the enthalpy injection port; a throttling and pressure reducing member is provided in the auxiliary pipeline; after being throttled and depressurized by the throttling and pressure reducing member, refrigerant enters the second flow channel, to absorb heat of refrigerant in the first flow channel.

Preferably, the defrosting system further includes a third pipeline system; two ends of the third pipeline system are respectively in communication with an intake of the enthalpy-adding compressor and the second end of the second flow channel; and the third pipeline system is provided with a supercooling valve.

Preferably, the third pipeline system is in communication with the intake of the enthalpy-adding compressor through a gas-liquid separator of the air conditioner.

Preferably, the first pipeline system is provided with a heating electronic expansion valve.

Preferably, the throttling and pressure reducing member is an electronic expansion valve of the economizer.

Preferably, an opening degree of the electronic expansion valve of the economizer is in proportion to a superheat degree of exhausted gas from the enthalpy-adding compressor.

Preferably, the defrosting system further includes an indoor unit electronic expansion valve, which is arranged in the main pipeline and configured to enable refrigerant in the main pipeline to first pass through the indoor unit electronic expansion valve first and then enter the indoor heat exchanger.

The present invention further provides an air conditioner, which includes any one of the defrosting systems above.

In the technical scheme provided by the present invention, when the air conditioner enters the defrosting mode, the enthalpy-adding compressor exhausts gas, and the high-temperature and high-pressure refrigerant enters the outdoor heat exchanger; the refrigerant passing through the outdoor heat exchanger enters the first flow channel of the economizer through the first pipeline system. The refrigerant flowing out of the first flow channel is branched to flow into the main pipeline and flow into the auxiliary pipeline. The refrigerant of the main pipeline enters the indoor heat exchanger, and then flows back to the enthalpy-adding compressor, completing one cycle. After the refrigerant in the auxiliary pipeline is throttled and depressurized by the throttling and pressure reducing member, it becomes the medium-pressure gas refrigerant; then the gas refrigerant enters the second flow channel of the economizer, and absorbs the heat of the refrigerant in the first flow channel. At this moment, the valve device is closed. Along with the continuously increased pressure of the system, the pressure in the second flow channel increases continuously and finally reaches the preset pressure, and the valve device is opened, so that the refrigerant is injected into the medium-pressure chamber of the enthalpy-adding compressor, thereby realizing a quasi-secondary compression process, increasing the exhaust amount and increasing the power consumption of the enthalpy-adding compressor finally. Moreover, as injecting enthalpy changes the flow direction of the refrigerant, the amount of the refrigerant in the gas admission is reduced appropriately, thus resulting in an increase in the exhaust gas temperature. The refrigerant injected into the enthalpy-adding compressor can cool the enthalpy-enthalpy-adding compressor to some extent, but, as the intake of the refrigerant is smaller, the amplitude of the temperature rise of the exhausted gas is greater than the amplitude of the temperature decrease, and accordingly, the temperature of the exhausted gas is increased finally so as to defrost quickly, thereby effectively meeting the user's comfort requirements for the air conditioner.

### BRIEF DESCRIPTION OF THE DRAWINGS

In order to describe the embodiments of the present invention or the technical schemes in the prior art more clearly, the figure to be used in describing the embodiments or the prior art will be briefly described. Obviously, the figure to be described below is merely an embodiment of the present invention. For those skilled in the art, other figures may be obtained according to the figure provided hereafter without any creative work.

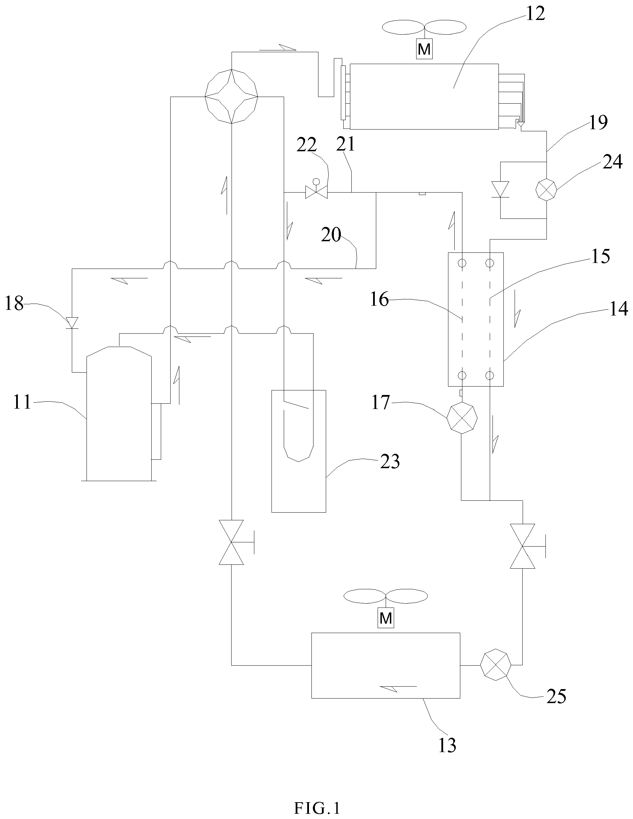

FIG.1 is a schematic view of a defrosting system according to an embodiment of the present invention;
in FIG.1:
enthalpy-adding compressor-11, outdoor heat exchanger-12, indoor heat exchanger-13, economizer-14, first flow channel-15, second flow channel-16, throttling and pressure reducing member-17, valve device-18, first pipeline system-19, second pipeline system-20, third pipeline system-21, supercooling valve-22, gas-liquid separator-23, heating electronic expansion valve-24, indoor unit electronic expansion valve-25.

### DETAILED DESCRIPTION OF THE PREFERRED EMBODIMENTS

One objective of the present embodiment is to provide a defrosting system of an air conditioner, which can shorten the defrosting time and meet the user's requirements for comfort. Another objective of the embodiment is to provide an air conditioner including the defrosting system above.

Hereinafter, the embodiments will be described with reference to the accompanying figure. Furthermore, the embodiments described below are not to limit the invention described in the claims. Additionally, the entire contents described in the following embodiments are not necessarily needed for the solutions of the invention described in the claims.

As shown in FIG.1, the defrosting system of the air conditioner provided by the embodiment includes an enthalpy-adding compressor 11, an outdoor heat exchanger 12, an indoor heat exchanger 13, and an economizer 14.

Wherein, the enthalpy-adding compressor 11 includes a medium-pressure chamber and an enthalpy injection port in communication with the medium-pressure chamber, and the high-high-pressure refrigerant is injected into the medium-pressure chamber through the enthalpy injection port.

The economizer 14 is provided with a first flow channel 15 and a second flow channel 16, and the refrigerant in the first flow channel 15 can exchange heat with the refrigerant in the second flow channel 16. A first end of the first flow channel 15 of the economizer 14 is in communication with the outdoor heat exchanger 12 through the first pipeline system 19; a second end of the first flow channel 15 is in communication with the indoor heat exchanger 13 through the main pipeline. When the air conditioner is in the defrosting mode, the refrigerant output from the outdoor heat exchanger 12 enters the first flow channel 15 of the economizer 14 through the first pipeline system 19, and the refrigerant output from the first flow channel 15 enters the indoor heat exchanger 13 through the main pipeline.

A first end of the second flow channel 16 of the economizer 14 is connected with the main pipeline through an auxiliary pipeline, that is, the refrigerant in the main pipeline is branched, and a branch of refrigerant enters the second flow channel 16 through the auxiliary pipeline. A second end of the second flow channel 16 is connected with the enthalpy injection port of the enthalpy-adding compressor 11 through a second pipeline system 20. Further, a throttling and pressure reducing member 17 is provided in the auxiliary pipeline, and after being throttled and depressurized by the throttling and pressure reducing member 17, the refrigerant enters the second flow channel 16, so that the refrigerant in the second flow channel 16 can absorb the heat of the refrigerant in the first flow channel 15, thereby forcing the refrigerant in the second flow channel 16 to vaporize.

A valve device 18 is arranged in the second pipeline system 20. When the refrigerant pressure in the second flow channel 16 reaches a preset value, the valve device 18 is opened, so that the refrigerant in the second flow channel 16 can be injected into the medium-pressure chamber through the enthalpy injection port.

In this way, when the air conditioner enters the defrosting mode, the enthalpy-adding compressor 11 exhausts gas, and the high-temperature and high-pressure refrigerant enters the outdoor heat exchanger 12; the refrigerant passing through the outdoor heat exchanger 12 enters the first flow channel 15 of the economizer 14 through the first pipeline system 19. The refrigerant flowing out of the first flow channel 15 is branched to flow into the main pipeline and flow into the auxiliary pipeline. The refrigerant of the main pipeline enters the indoor heat exchanger 13, and then flows back to the enthalpy-adding compressor 11, completing one cycle.

After the refrigerant in the auxiliary pipeline is throttled and depressurized by the throttling and pressure reducing member 17, it becomes the medium-pressure gas refrigerant; then the gas refrigerant enters the second flow channel 16 of the economizer 14, and absorbs the heat of the refrigerant in the first flow channel 15. At this moment, the valve device 18 is closed. Along with the continuously increased pressure of the system, the pressure in the second flow channel 16 increases continuously and finally reaches the preset pressure, and the valve device 18 is opened, so that the refrigerant is injected into the medium-pressure chamber of the enthalpy-enthalpy-adding compressor 11, thereby realizing a quasi-secondary compression process, increasing the exhaust amount and increasing the power consumption of the enthalpy-adding compressor 11 finally. Moreover, as injecting enthalpy changes the flow direction of the refrigerant, the amount of the refrigerant in the gas admission is reduced appropriately, thus resulting in an increase in the exhaust gas temperature. The refrigerant injected into the enthalpy-enthalpy-adding compressor 11 can cool the enthalpy-adding compressor 11 to some extent, but, as the intake of the refrigerant is smaller, the amplitude of the temperature rise of the exhausted gas is greater than the amplitude of the temperature decrease, and accordingly, the temperature of the exhausted gas is increased finally so as to defrost quickly, thereby effectively meeting the user's requirements for comfort of the air conditioner.

In addition, in the technical scheme provided by this embodiment, a third pipeline system 21 is further provided. Two ends of the third pipeline system 21 are respectively in communication with the intake of the enthalpy-adding compressor 11 and a second end of the second flow channel 16, and the third pipeline system 21 is provided with a supercooling valve 22.

In this way, when the air conditioner is in a non-defrosting mode, the supercooling valve 22 is opened; the refrigerant output from the second flow channel 16 of the economizer 14 enters the intake of the enthalpy-adding compressor 11 through the third pipeline system 21. When the air conditioner is in the defrosting mode, the supercooling valve 22 is closed, and after the refrigerant in the second flow channel 16 is accumulated to a preset pressure, the valve device 18 is opened, so as to realize injecting enthalpy and rapid defrosting.

It should be noted that, preferably, the third pipeline system 21 is in communication with the intake of the enthalpy-adding compressor 11 through the gas-liquid separator 23 of the air conditioner. That is, when the supercooling valve 22 is opened, the refrigerant in the third pipeline system 21 is separated by the gas-liquid separator 23, and then enters the intake of the enthalpy-adding compressor 11, thereby preventing large amount of oil from being taken in through the intake of the enthalpy-adding compressor 11.

In addition, the first pipeline system 19 is provided with a heating electronic expansion valve 24. When the air conditioner is in the defrosting mode, the refrigerant in the outdoor heat exchanger 12 first passes through the heating electronic expansion valve 24, and after being throttled and depressurized by the heating electronic expansion valve 24, the refrigerant enters the economizer 14 finally. At this moment, the heating electronic expansion valve 24 keeps the maximum opening degree, to minimize the resistance exerted on the refrigerant. In addition, it should be noted that, the throttling and pressure reducing member 17 arranged in the auxiliary pipeline may act as an electronic expansion valve of the economizer.

Further, according to the technical scheme of this embodiment, the opening degree of the electronic expansion valve of the economizer can be regulated according to the superheat degree of the exhausted gas from the enthalpy-adding compressor 11.

With such configurations, the opening degree of the electronic expansion valve of the economizer is regulated according to the superheat degree of the exhausted gas from the enthalpy-adding compressor 11. When the superheat degree of the exhausted gas from the enthalpy-adding compressor 11 is higher, the opening degree of the electronic expansion valve of the economizer increases, thereby enabling the refrigerant in the second flow channel 16 to quickly reach a preset pressure capable of opening the valve device 18, realizing injecting enthalpy in advance.

In addition, in this embodiment, an indoor unit electronic expansion valve 25 is further arranged in the main pipeline, so that the refrigerant in the main pipeline passes through the indoor unit electronic expansion valve 25 first, and then enters the indoor heat exchanger 13. Similarly, in the defrosting mode, the indoor unit electronic expansion valve 25 keeps the maximum opening degree, so as to reduce the resistance exerted on the refrigerant in the main pipeline.

The disclosure also provides an air conditioner including the defrosting system described in the above embodiment. In this way, the air conditioner provided in this embodiment can shorten the defrosting time and meet the user's requirements for comfort. The beneficial effects of the air conditioner can be derived similarly as the beneficial effects achieved by the defrosting system above, and it will not be described herein again.

The description of the embodiments disclosed above enables those skilled in the art to implement or use the present invention. Various modifications to these embodiments are readily apparent to those skilled in the art, and the general principles defined herein may be applied to other embodiments without departing from the spirits or the scope of the invention. Thus, the present invention will not be limited to the embodiments illustrated herein, but conform to the widest scope consistent with the principles and novel features disclosed herein.

## Claims

1. A defrosting system of an air conditioner, **characterized by** comprising an enthalpy-adding compressor (11), an outdoor heat exchanger (12), an indoor heat exchanger (13), and an economizer (14); wherein, the enthalpy-adding compressor (11) comprises a medium-pressure chamber and an enthalpy injection port in communication with the medium-pressure chamber; the economizer (14) is provided with a first flow channel (15) and a second flow channel (16); a first end of the first flow channel (15) is in communication with the outdoor heat exchanger (12) through a first pipeline system (19); a second end of the first flow channel (15) is in communication with the indoor heat exchanger (13) through a main pipeline; a first end of the second flow channel (16) is in communication with the main pipeline through an auxiliary pipeline; a second end of the second flow channel (16) is in communication with an enthalpy injection port of the enthalpy-adding compressor (11) through a second pipeline system (20); a valve device (18) is arranged in the second pipeline system (20); when a refrigerant pressure in the second flow channel (16) reaches a preset value, the valve device (18) is opened, enabling the refrigerant in the second flow channel (16) to be injected into the medium-pressure chamber through the enthalpy injection port; a throttling and pressure reducing member (17) is provided in the auxiliary pipeline; after being throttled and depressurized by the throttling and pressure reducing member (17), refrigerant enters the second flow channel (16), to absorb heat of refrigerant in the first flow channel (15).

2. The defrosting system according to claim 1, **characterized by** further comprising a third pipeline system (21); two ends of the third pipeline system (21) are respectively in communication with an intake of the enthalpy-adding compressor (11) and the second end of the second flow channel (16); and the third pipeline system (21) is provided with a supercooling valve (22).

3. The defrosting system according to claim 2, **characterized in that**, the third pipeline system (21) is in communication with the intake of the enthalpy-adding compressor (11) through a gas-liquid separator (23) of the air conditioner.

4. The defrosting system according to claim 1, **characterized in that**, the first pipeline system (19) is provided with a heating electronic expansion valve (24).

5. The defrosting system according to claim 1, **characterized in that**, the throttling and pressure reducing member (17) is an electronic expansion valve of the economizer.

6. The defrosting system according to claim 5, **characterized in that**, an opening degree of the electronic expansion valve of the economizer is in proportion to a superheat degree of exhausted gas from the enthalpy-adding compressor (11).

7. The defrosting system according to claim 1, **characterized by** further comprising an indoor unit electronic expansion valve (25), which is arranged in the main pipeline and configured to enable refrigerant in the main pipeline to first pass through the indoor unit electronic expansion valve (25) and then enter the indoor heat exchanger (13).

8. An air conditioner, **characterized by** comprising the defrosting system defined in any one of claims 1-7.
